# EUROPÄISCHE PATENTSCHRIFT

(11) **EP 1 661 223 B1**
(45) Veröffentlichungstag und Bekanntmachung des Hinweises auf die Patenterteilung: **30.05.2007**
(21) Anmeldenummer: 04718222.5
(22) Anmeldetag: 08.03.2004
(51) Int. Cl.: H02H 3/06, H02H 7/26, H02H 3/04, H02H 3/33

(54) **SCHALTEINRICHTUNG**
SWITCHING DEVICE
DISPOSITIF DE COMMUTATION

(30) Priorität: 28.08.2003 AT 13572003
(43) Veröffentlichungstag der Anmeldung: 31.05.2006
(73) Patentinhaber: Moeller Gebäudeautomation KG, 3943 Schrems (AT)
(72) Erfinder: KOCH, Michael, A-1190 Wien (AT)
(74) Vertreter: Gibler, Ferdinand
(86) Internationale Anmeldenummer: PCT/AT2004/000076
(87) Internationale Veröffentlichungsnummer: WO 2005/022715

(56) Entgegenhaltungen:
- DE-A- 3 111 255
- FR-A- 2 147 841
- FR-A- 2 538 177
- US-A- 5 347 417

## Beschreibung

Die Erfindung betrifft eine Schalteinrichtung für einen elektrischen Verteiler mit einem FI-Schutzschalter mit einem Hebel und mindestens zwei, diesem nachgeschalteten Leitungs-Schutzschaltern, die je mindestens einen Stromkreis absichern.

Bei bekannten derartigen Schalteinrichtungen sind die Leitungs-Schutzschalter direkt dem FI-Schutzschalter nachgeschaltet. Spricht der FI-Schutzschalter an und unterbricht den Schaltkreis, so ist es erforderlich, z.B. durch Überprüfung und Messung herauszufinden, welcher Stromkreis fehlerhaft ist. Nach Behebung des Fehlers oder Abtrennen des fehlerhaften Gerätes kann der FI-Schutzschalter wieder eingeschaltet werden.

Der Nachteil dieser bekannten Schalteinrichtung liegt im wesentlichen darin, dass bei Auftreten eines Masseschlusses in einem der an den FI-Schutzschalter angeschlossenen und über separate Leitungs-Schutzschalter abgesicherten Stromkreise alle Stromkreise unterbrochen werden und solange unterbrochen bleiben, bis der Fehler gefunden ist und der FI-Schutzschalter wieder eingeschaltet wird. Dabei ergibt sich ein besonderer Nachteil, wenn eine solche Schalteinrichtung in einem Haushalt angeordnet ist und an einem der Schaltkreise z.B. ein Gefrierschrank angeschlossen ist. Tritt bei Abwesenheit des Betreibers z.B. ein zu einem Auslösen des FI-Schutzschalters führender Fehler auf, so bleibt z.B. auch ein Gefrierschrank, oder ein anderes Gerät, dessen Ausfall erhebliche Probleme bereitet, vom Netz getrennt, auch wenn dieses selbst oder der dieses Gerät enthaltende Stromkreis keinen Fehler aufweist, und bleibt so lange abgeschaltet, bis die erforderlichen Kontrollen und Messungen durchgeführt sind und der FI-Schutzschalter wieder eingeschaltet werden kann. Bei einer längeren Abwesenheit des Benutzers kann dies zu erheblichen Problemen und Schäden führen.

Dokument DE 31 11255 A1 offenbart eine Schalteinrichtung gemäß dem Oberbegriff des Anspruchs 1.

Ziel der Erfindung ist es, diese Nachteile zu vermeiden und eine Schalteinrichtung der eingangs erwähnten Art vorzuschlagen, bei dem in einem Fehlerfall ein rasches Einschalten der fehlerfreien Schaltkreise möglich ist.

Erfindungsgemäß wird dies dadurch erreicht, dass jedem Leitungs-Schutzschalter ein Relais unmittelbar vor- oder nachgeschaltet ist, dass ein Wiedereinschaltgerät zum Betätigen des Hebels vorgesehen ist, und weiters eine Steuereinheit vorgesehen ist, die eingangsseitig mit dem FI-Schutzschalter und ausgangsseitig mit jedem Relais und dem Wiedereinschaltgerät verbunden ist, wobei durch die Steuereinheit in Abhängigkeit des Schaltzustands des FI-Schutzschalters ein Steuerprogramm startet, das das Wiedereinschaltgerät und jedes Relais einzeln oder in Gruppen nach einem vorgegebenen Programm ansteuert.

Durch die vorgeschlagenen Maßnahmen ist sichergestellt, dass nach einem Auslösen des FI-Schutzschalters alle Stromkreise, die an diesem angeschlossen sind, durch die Relais abgeschaltet werden können, wonach diese Stromkreise nach dem Einschalten des FI-Schutzschalters einzeln oder in Gruppen wieder eingeschaltet werden können, bis es nach dem Einschalten des fehlerhaften Stromkreises zu einem abermaligen Auslösen des FI-Schutzschalters kommt. Nach dem Abschalten des zuletzt eingeschalteten Stromkreises kann der FI-Schutzschalter wieder eingeschaltet werden, wonach die restlichen Stromkreise sequenziell eingeschaltet werden können.

In weiterer Ausgestaltung der Erfindung kann vorgesehen sein, dass eine Speichervorrichtung vorgesehen ist, die für jedes Relais oder für vorgebbare Gruppen von Relais abspeichert, ob beim letzmaligen Schließen des Relais oder der vorgebbaren Gruppe von Relais in einem vorgegebenen Zeitintervall unmittelbar nach dem Schließen der FI-Schutzschalters ausgelöst worden ist oder nicht.

So kann wartungsfrei festgehalten werden, in welchen Stromkreisen oder Gruppen von Stromkreisen die Ursache für ein Auslösen des FI-Schutzschalters zu finden sein müsste und entsprechende Maßnahmen abgeleitet werden.

In Weiterführung der Erfindung kann vorgesehen sein, dass eine Meldevorrichtung, wie z.B. ein Anzeigegerät, Modemmodul, SMS-Modul, Funkmodul oder dgl., zur Anzeige und/oder Übertragung einer Information vorgesehen ist, ob beim letzmaligen Schließen des Relais oder der vorgebbaren Gruppe von Relais in einem vorgegebenen Zeitintervall unmittelbar nach dem Schließen der FI-Schutzschalters ausgelöst worden ist oder nicht.

So kann rasch angezeigt bzw. gemeldet werden, dass bestimmte Stromkreise schadhaft sind und eine ehestmögliche Behebung des Schadens in die Wege geleitet werden.

Die Erfindung betrifft weiters ein Verfahren zur Ansteuerung einer Schalteinrichtung für einen elektrischen Verteiler mit einem FI-Schutzschalter und mindestens zwei, diesem nachgeschalteten Leitungs-Schutzschaltern, die je mindestens einen Stromkreis absichern.

Ein weiteres Ziel der Erfindung ist es, ein Verfahren zur Ansteuerung einer erfindungsgemäßen Schalteinrichtung vorzuschlagen, das im Falle eines Ansprechens des FI-Schutzschalters ein rasches und einfaches Einschalten aller fehlerfreien Stromkreise ermöglicht.

Erfindungsgemäß wird dies dadurch erreicht, dass nach einem Auslösen eines FI-Schutzschalters Leitungs-Schutzschaltern zugeordnete Relais geöffnet werden, wobei jedes der Relais jeweils einem Leitungs-Schutzschalter unmittelbar vor- oder nachgeordnet ist, der FI-Schutzschalter über ein Wiedereinschaltgerät geschlossen wird, die Relais einzeln und/oder in vorgebbaren Gruppen in einer vorbestimmbaren Reihenfolge geschlossen werden, nach dem Schließen eines der Relais oder einer der Gruppen von Relais in einer vorbestimmbaren Zeit das Auslösen des FI-Schutzschalters detektiert wird, und sofern ein Auslösen erkannt wird, das zuletzt eingeschaltete Relais oder die zuletzt eingeschaltete Gruppe von Relais geöffnet wird, der FI-Schutzschalter über ein Wiedereinschaltgerät geschlossen wird, und anschließend das nächste Relais oder die nächste Gruppe von Relais der vorgebbaren Reihenfolge geschlossen wird.

Durch die vorgeschlagenen Maßnahmen kann eine elektrische Anlage nach dem Auftreten eines Fehlers, der zu einem Auslösen des FI-Schutzschalters führt, mit Ausnahme eines fehlerhaften Schaltkreises, rasch wieder automatisch in Betrieb genommen werden.

Insbesondere kann vorgesehen sein, dass nach dem Auslösen des FI-Schutzschalters die Relais umgruppiert werden.

Damit können insbesondere für die Ansteuerung von Schalteinrichtungen für sehr viele Leitungs-Schutzschalter wesentlich schneller schadhafte Stromkreise lokalisiert werden und der Normalbetrieb der fehlerfreien Stromkreise wiederhergestellt werden.

In Weiterführung der Erfindung kann vorgesehen sein, dass nach dem Auslösen des FI-Schutzschalters wenigstens eine Gruppe von Relais in wenigstens zwei Untergruppen von einem oder mehreren Relais unterteilt wird.

So kann in einem ersten Durchlauf des Verfahrens für die meisten Stromkreise besonders rasch erkannt werden, welche Gruppen von Stromkreisen fehlerfrei sind, während in einem weiteren Durchlauf des Verfahrens schadhafte Stromkreise genauer lokalisiert werden. Stromunterbrechungen werden so für möglichst viele Verbraucher möglichst kurz gehalten.

Weiters kann in Fortbildung der Erfindung vorgesehen sein, dass nach einer vorgebbaren Wartezeit ein geöffnetes Relais oder Gruppe von geöffneten Relais geschlossen wird, und im Falle des Auslösens des FI-Schutzschaltes in einer vorbestimmbaren Zeit nach dem Schließen das Verfahren gemäß Anspruch 1 erneut startet.

So kann erreicht werden, dass ein Stromkreis wieder in Betrieb genommen werden kann, der in Folge von Feuchtigkeit einen Fehlerstrom hervorgerufen hat, sofern diese Feuchtigkeit zwischenzeitlich aufgetrocknet ist.

Die Erfindung wird unter Bezugnahme auf die beigeschlossenen Zeichnungen, in welchen Ausführungsformen dargestellt sind, näher beschrieben. Dabei zeigt:
Fig. 1 schematisch eine erfindungsgemäße Schalteinrichtung,
Fig. 1a eine mögliche Gruppierung von Relais der erfindungsgemäßen Schalteinrichtung,
Fig. 2 ein Flussdiagramm des erfindungsgemäßen Verfahrens, und
Fig. 3 einen Netzplan der Komponenten der Steuereinheit der erfindungsgemäßen Schalteinrichtung.

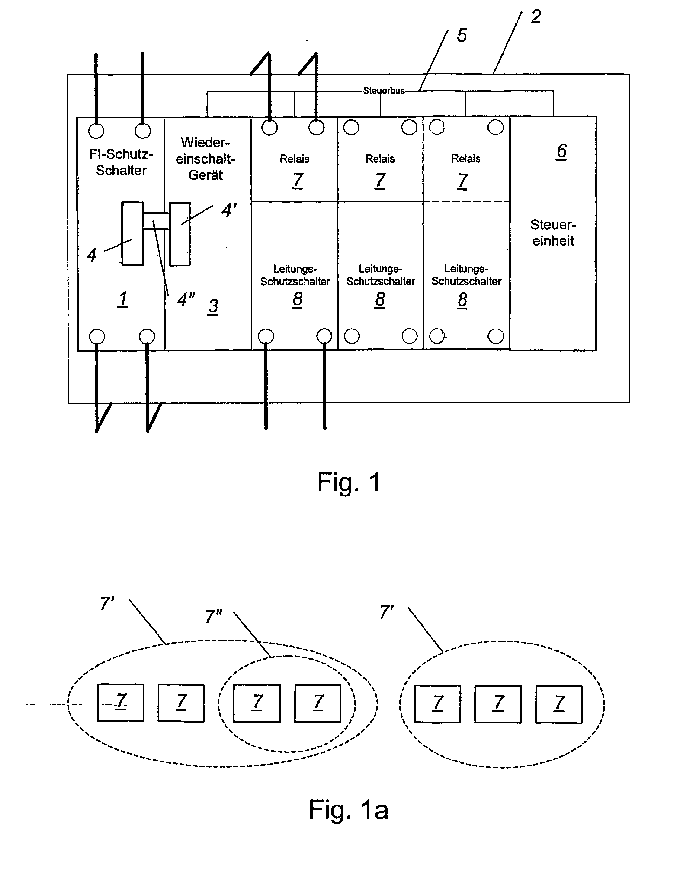

Die Schalteinrichtung nach Fig. 1 weist einen FI-Schutzschalter 1 auf, der in einem, Verteiler 2 üblicher Bauart montiert ist. Diesem FI-Schutzschalter 1 ist ein Wiedereinschaltgeärt 3 zugeordnet, dessen Stellorgan 4' mit einem Hebel 4 des FI-Schutzschalters 1 über eine Kopplung 4" mechanisch verbunden ist.

Dieses Wiedereinschaltgerät 3 ist über einen Steuerbus 5 mit einer Steuereinheit 6 verbunden ist. An diesem Steuerbus 5 sind weiters Relais 7 angeschlossen, die je einem Leitungs-Schutzschalter 8 zugeordnet, bzw. diesem vor- oder nachgeschaltet sind. Dabei sind die Relais 7 dem FI-Schutzschalter 1 nachgeschaltet.

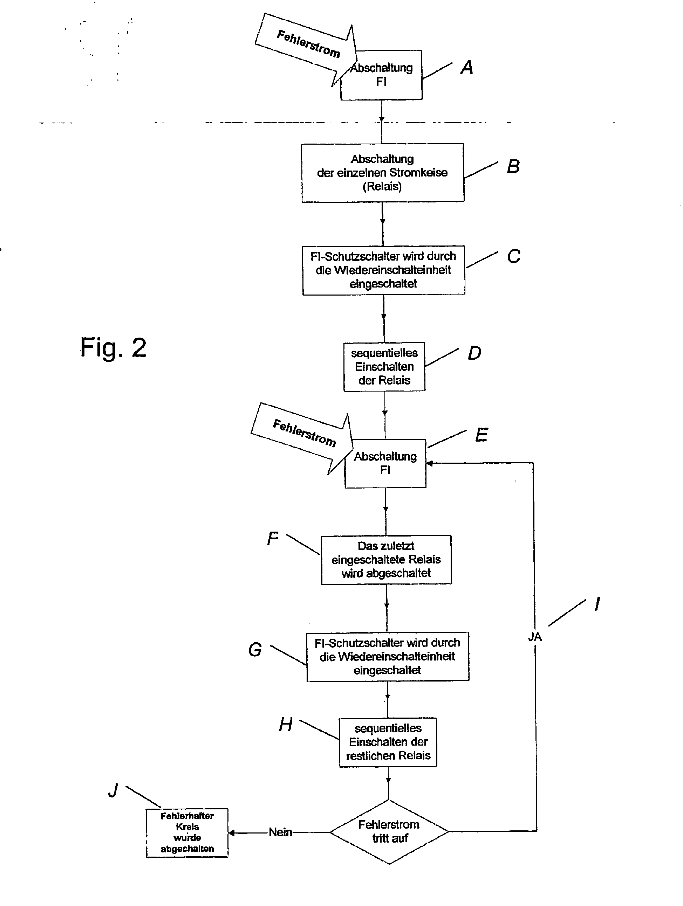

Wie aus dem Flussdiagramm gemäß der Fig. 2 zu ersehen ist, erfolgt nach einer Auslösung A des FI-Schutzschalters 1 aufgrund eines unzulässigen Fehlerstromes eine Abschaltung *B* aller Relais 7. Solche Relais können insbesondere verriegelbar sein und weiters für Lastströme von beispielsweise 20 Ampere geeignet sein. Es sind aber auch andere Bauarten von Relais 7 für gegenständliche Erfindung geeignet. Nach Abschaltung aller Relais 7 wird der FI-Schutzschalter 1 durch das Wiedereinschaltgerät 3 eingeschaltet C. Anschließend werden Relais 7 einzeln oder in Gruppen nacheinander durch entsprechend adressierte Signale von der Steuereinheit 6 angesteuert und eingeschaltet D, bis es in einem vorgebbarem Zeitintervall unmittelbar nach dem Schließen eines Relais 7 oder einer Gruppe 7' vom Relais bei neuerlichem Auftritt eines Fehlerstroms *I* zu einer neuerlichen Auslösung E des FI-Schutzschalters 1 aufgrund eines Fehlerstromes kommt und somit der fehlerhafte Stromkreis erkannt wurde.

Nun wird das zuletzt eingeschaltete Relais 7 oder auch Gruppe 7' von Relais von der Steuereinheit 6 ausgeschaltet F, bzw. dessen Kontakte in die geöffnete Stellung gebracht und der FI-Schutzschalter 1 durch das Wiedereinschaltgerät 3 wieder eingeschaltet G. Anschließend werden die restlichen Relais 7 oder Gruppen 7' von Relais sequenziell von der Steuereinheit 6 angesteuert und eingeschaltet H. Dabei tritt, da kaum davon auszugehen ist, dass gleichzeitig zwei Stromkreise, die von den Leitungsschutzschaltern 8 gesichert sind, fehlerhaft sind, in der Regel kein Fehlerstrom auf, sodass der FI-Schutzschalter 1 nicht auslöst. Der fehlerhafte Stromkreis bleibt abgeschaltet J. In ähnlicher Art und Weise kann das Verfahren aber auch mehrere fehlerhafte Stromkreise, die einem Verteiler 2 zugeordnet sind, lokalisieren und dauerhaft abschalten.

Damit ist sichergestellt, dass im Falle eines auftretenden Fehlers nur der tatsächlich eine Fehler aufweisende Stromkreis für eine längere Zeit vom Netz getrennt bleibt J, wogegen die fehlerfreien Stromkreise nach nur kurzer Unterbrechung wieder an das Versorgungsnetz geschaltet werden und bleiben. Dadurch können unnötige Schäden durch eine für längere Zeit bestehen bleibende Abschaltung vom Netz vermieden werden, wie sie z.B. bei einer längern Abschaltung einer Gefrier oder Kühleinrichtung vermieden werden.

Insbesondere bei einer Anordnung mit vielen Relais 7, die gemeinsam von einem FI-Schutzschalter 1 abgesichert sind, kann es sinnvoll sein, mehrere Relais 7 zu Gruppen 7' bzw. Untergruppen 7" zusammenzufassen, die gemeinsam von der Steuereinheit 6 geschaltet werden können. Insbesondere ist das bei elektrischen Geräten oder Gerätegruppen sinnvoll, die mehrere Stromkreise benötigen, da auch im Falle nur eines schadhaften Stromkreises das Gerät oder die Gerätegruppe komplett von der elektrischen Energieversorgung getrennt werden sollte und daher auch die anderen Stromkreise, die dieses Gerät versorgen, unterbrochen werden sollten.

Insbesondere bei einer Vielzahl von Geräten, deren Betrieb nach einem Stromausfall besonders rasch wiederhergestellt werden soll, beispielsweise in der Industrie oder im Gesundheitsbereich, kann das Verfahren dahingehend optimiert werden, dass durch geschicktes Gruppieren von Relais 7 vergleichsweise nur wenige Zyklen durchlaufen werden müssen und so besonders rasch fehlerhafte Stromkreise identifiziert werden können und die fehlerfreien Stromkreise wieder in Betrieb genommen werden können. Einerseits können Relais 7 oder Gruppen 7' von Relais (vgl. Fig. 1a), die besonders sensiblen Geräten zugeordnet sind, in der Wiedereinschaltreihenfolge vorangestellt werden. Andererseits kann durch ein Wiedereinschalten von Gruppen 7' von Relais sehr viel Zeit gespart werden, insbesondere bei Gruppen 7', die nur fehlerfreie Relais 7 enthalten, im Vergleich zu einer nacheinander einzelnen Wiedereinschaltung der Relais 7. Im Falle eines neuerlichen Auslösens I des FI-Schutzschalters 1 kann nun entweder die ganze Gruppe 7' von Relais ausgeschaltet bleiben, oder aber auch in weiteren Zyklen des Verfahrens geprüft werden, welchen Untergruppen 7" von Relais oder welchen Relais 7 schadhafte Stromkreise zugeordnet sind. Die Gruppierungen von Relais 7 zu Gruppen 7' oder Untergruppen 7" kann hierbei aufgrund einer gegebenen Anordnung von elektrischen Geräten oder Gerätegruppen zweckmäßig vorgegeben werden. Um nach dem Auslösen des FI-Schutzschalters 1 nach Wiedereinschaltung einer Gruppe 7' von Relais einen Schadhaften Stromkreis möglichst rasch zu lokalisieren, können auch, beispielsweise unter Anwendung einer sukzessiven Approximation, geeignete Untergruppen 7" von Relais 7 gebildet werden, solange die schadhaften Stromkreise lokalisiert sind und die fehlerfreien Stromkreise wieder in Betrieb sind.

Fehlerströme können beispielsweise durch Feuchtigkeit hervorgerufen werden. Nun ist es nicht unwahrscheinlich, dass eine einen Fehlerstrom hervorrufende Feuchtigkeit nach einiger Zeit auftrocknet, und ein fehlerfreier Weiterbetrieb des betroffenen Stromkreises möglich wird. Daher kann vorgesehen sein, dass ein abgeschalteter Stromkreis nach einiger Zeit durch Schließen des zugeordneten Relais wieder in Betrieb genommen wird. Im Falle des Auslösens des FI-Schutzschalters 1 in einem vorgebbaren Zeitintervall unmittelbar nach dem Schließen wird nun entweder das Verfahren von neuem Durchlaufen, oder alle bis dahin fehlerfreien Stromkreise werden wieder in Betrieb genommen, der immer noch schadhafte jedoch nicht. Durch eine Speichervorrichtung 9, die für jedes Relais 7 oder für vorgebbare Gruppen 7' von Relais abspeichert, ob beim letzmaligen Schließen des Relais 7 oder der vorgebbaren Gruppe 7' von Relais in einem vorgebbaren Zeitintervall unmittelbar nach dem Schließen der FI-Schutzschalter 1 ausgelöst wurde, kann dies leicht bewerkstelligt werden.

Eine weitere Möglichkeit zur raschen Behebung eines Schadens, der einen Fehlerstrom hervorgerufen hat, besteht darin, eine Meldevorrichtung 10 vorzusehen. Die Meldevorrichtung 10 kann beispielsweise ein Anzeigegerät sein, das beispielsweise über LEDs oder eine Digitalanzeige Aufschluss über den Schaltzustand der Relais 7 oder Gruppen 7' von Relais gibt, bzw. ob beim letzmaligen Schließen des Relais 7 oder der vorgebbaren Gruppe 7' von Relais in einem vorgebbaren Zeitintervall unmittelbar nach dem Schließen der FI-Schutzschalter 1 ausgelöst wurde oder nicht. Diese Information kann die Meldevorrichtung 10 insbesondere von der Speichervorrichtung 9 direkt oder über die CPU 11 der Steuereinheit 6 übernehmen.

Die entsprechende Information kann aber auch über ein Meldevorrichtung 10 in Form eines Meldemoduls, eines SMS-Moduls, eines Funkmoduls oder dgl. übertragen werden, womit eine Fernüberwachung der Stromkreise möglich wird.

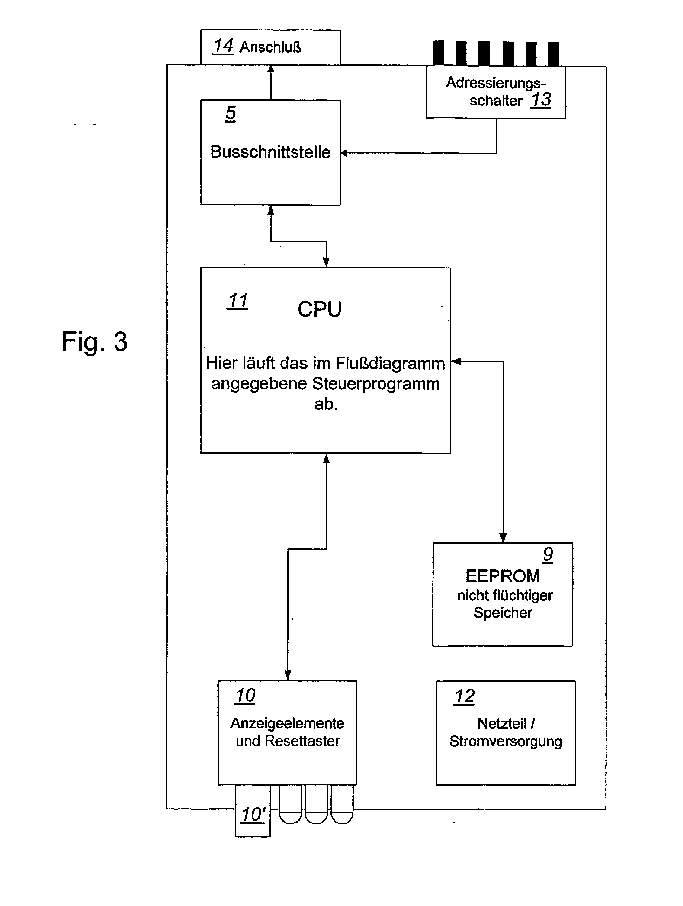

In Fig. 3 sind die Komponenten der Steuereinheit 6 selbst schematisch dargestellt. Kern der Steuereinheit 6 ist die CPU 11, in der das Programm zur Steuerung des Verfahrens abläuft. Die CPU 11 steht mit der Speichervorrichtung 9 in Datenaustauschverbindung, die das Programm selbst in kodierter Form speichern kann und die auch abspeichern kann, ob beim letzmaligen Schließen des Relais 7 oder der vorgebbaren Gruppe 7' von Relais in einem vorgebbaren Zeitintervall unmittelbar nach dem Schließen der FI-Schutzschalter 1 ausgelöst wurde oder nicht. Über eine Busschnittstelle 5 und einen Anschluss 14 ist die Steuereinheit 6 mit den Relais 7 verbunden.

Zur Steuerung der einzelnen Relais 7 über Bus ist es notwendig, dass die Teilnehmer des Systems eindeutige Adressen für ihre Ansteuerung aufweisen. Dies kann einerseits dadurch erreicht werden, dass die Teilnehmer, wie Wiedereinschaltgerät 3 und Relais 7, vom Werk her eindeutige Adressen (z.B. Seriennummern) zugeordnet erhalten, und andererseits durch manuelles Festlegung einer Adresse mit Adressierungsschaltern 13.

Fig. 3 zeigt weiters eine Meldevorrichtung 10 in Form eines Anzeigegeräts mit drei symbolhaft angedeuteten LEDs. Hier ist weiters ein Resettaster 10' vorgeschlagen, durch den beispielsweise ein erneuter Start des Verfahrens nach Anspruch 1 ausgelöst werden kann. Zum Betrieb der Steuereinheit 6 ist weiters eine Stromversorgung 12 vorgesehen. Diese Stromversorgung kann einerseits vom Netz gespeist sein, aber auch batteriegepuffert ausgeführt sein.

## Patentansprüche

1. Schalteinrichtung für einen elektrischen Verteiler mit einem FI-Schutzschalter (1) mit einem Hebel (4) und mindestens zwei, diesem nachgeschalteten Leitungs-Schutzschaltern (8), die je mindestens einen Stromkreis absichern, **dadurch gekennzeichnet, dass** jedem Leitungs-Schutzschalter (8) ein Relais (7) unmittelbar vor- oder nachgeschaltet ist, dass ein Wiedereinschaltgerät (3) zum Betätigen des Hebels (4) vorgesehen ist, und weiters eine Steuereinheit (6) vorgesehen ist, die eingangsseitig mit dem FI-Schutzschalter (1) und ausgangsseitig mit jedem Relais (7) und dem Wiedereinschaltgerät (3) verbunden ist, wobei durch die Steuereinheit (6) in Abhängigkeit des Schaltzustands des FI-Schutzschalters (1) ein Steuerprogramm startet, das das Wiedereinschaltgerät (3) und jedes Relais (7) einzeln oder in Gruppen nach einem vorgegebenen Programm ansteuert.

2. Schalteinrichtung nach Anspruch 1, **dadurch gekennzeichnet, dass** eine Speichervorrichtung (9) vorgesehen ist, die für jedes Relais (7) oder für vorgebbare Gruppen (7') von Relais (7) abspeichert, ob beim letzmaligen Schließen des Relais (7) oder der vorgebbaren Gruppe (7') von Relais (7) in einem vorgegebenen Zeitintervall unmittelbar nach dem Schließen der FI-Schutzschalters (1) ausgelöst worden ist oder nicht.

3. Schalteinrichtung nach Anspruch 1 oder 2, **dadurch gekennzeichnet, dass** eine Meldevorrichtung (10), wie z.B. ein Anzeigegerät, Modemmodul, SMS-Modul, Funkmodul oder dgl., zur Anzeige und/oder Übertragung einer Information vorgesehen ist, ob beim letzmaligen Schließen des Relais (7) oder der vorgebbaren Gruppe von Relais (7) in einem vorgegebenen Zeitintervall unmittelbar nach dem Schließen der FI-Schutzschalters (1) ausgelöst worden ist oder nicht.

4. Verfahren zur Ansteuerung einer Schalteinrichtung für einen elektrischen Verteiler mit einem FI-Schutzschalter (1) und mindestens zwei, diesem nachgeschalteten Leitungs-Schutzschaltern (8), die je mindestens einen Stromkreis absichern, insbesondere nach einem der Ansprüche 1 bis 3, **dadurch gekennzeichnet, dass** nach einem Auslösen eines FI-Schutzschalters (1) Leitungs-Schutzschaltern (8) zugeordnete Relais (7) geöffnet werden, wobei jedes der Relais (7) jeweils einem Leitungs-Schutzschalter (8) unmittelbar vor- oder nachgeordnet ist, der FI-Schutzschalter (1) über ein Wiedereinschaltgerät (3) geschlossen wird, die Relais (7) einzeln und/oder in vorgebbaren Gruppen (7') in einer vorbestimmbaren Reihenfolge geschlossen werden, nach dem Schließen eines der Relais (7) oder einer der Gruppen (7') von Relais in einer vorbestimmbaren Zeit das Auslösen des FI-Schutzschalters (1) detektiert wird, und sofern ein Auslösen erkannt wird, das zuletzt eingeschaltete Relais (7) oder die zuletzt eingeschaltete Gruppe (7') von Relais geöffnet wird, der FI-Schutzschalter (1) über ein Wiedereinschaltgerät (3) geschlossen wird, und anschließend das nächste Relais (7) oder die nächste Gruppe (7') von Relais der vorgebbaren Reihenfolge geschlossen wird.

5. Verfahren zur Ansteuerung einer Schalteinrichtung nach Anspruch 4, **dadurch gekennzeichnet, dass** nach dem Auslösen des FI-Schutzschalters (1) die Relais (7) umgruppiert werden.

6. Verfahren zur Ansteuerung einer Schalteinrichtung nach Anspruch 5, **dadurch gekennzeichnet, dass** nach dem Auslösen des FI-Schutzschalters (1) wenigstens eine Gruppe (7') von Relais in wenigstens zwei Untergruppen (7") von einem oder mehreren Relais (7) unterteilt wird.

7. Verfahren zur Ansteuerung einer Schalteinrichtung nach einem der Ansprüche 4 bis 6, **dadurch gekennzeichnet, dass** nach einer vorgebbaren Wartezeit ein geöffnetes Relais (7) oder Gruppe (7') von geöffneten Relais (7) geschlossen wird, und im Falle des Auslösens des FI-Schutzschaltes (1) in einer vorbestimmbaren Zeit nach dem Schließen das Verfahren gemäß Anspruch 1 erneut startet.

## Claims

1. A switching device for an electric distribution board with an earth leakage circuit breaker (1), comprising a lever (4) and at least two miniature circuit breakers (8) which are connected in outgoing circuit with the same and which each secure at least one circuit, **characterized in that** a relay (7) is directly connected in incoming and outgoing circuit with each miniature circuit breaker (8), that a reclosing device (3) for actuating the lever (4) is provided, and further a control unit (6) is provided which is connected on the input side with the earth leakage circuit breaker (1) and on the output side with each relay (7) and the reclosing device (3), with a control program starting by the control unit (6) depending on the switching state of the earth leakage circuit breaker (1) which triggers the reclosing device (3) and each relay (7) individually or in groups according to a predetermined program.

2. A switching device according to claim 1, **characterized in that** a storage apparatus (9) is provided which stores for each relay (7) or for predeterminable groups (7') of relay (7) whether or not a trip was initiated during the last closing of the relay (7) or the predeterminable group (7') of relays (7) in a predeterminable time interval directly after the closing of the earth leakage circuit breaker (1).

3. A switching device according to claim 1 or 2, **characterized in that** a signaling apparatus (10) such as a display device, modem module, SMS module, radio module or the like for displaying and/or transmitting information is provided whether or not a trip was initiated during the last closing of the relay (7) or the predeterminable group (7') of relays (7) in a predeterminable time interval directly after the closing of the earth leakage circuit breaker (1).

4. A method for triggering a switching device for an electric distribution board with an earth leakage circuit breaker (1) and at least two miniature circuit breakers (8) which are connected in outgoing circuit with the same, which each secure at least one circuit, especially according to one of the claims 1 to 3, **characterized in that** after the tripping of an earth leakage circuit breaker (1) relays (7) associated with miniature circuit breakers (8) are opened, with each relay (7) being arranged upstream or downstream of each miniature circuit breaker (8), the earth leakage circuit breaker (1) is closed by a reclosing device (3), the relays (7) are closed individually and/or in predeterminable groups (7') in a predeterminable sequence, the tripping of the earth leakage circuit breaker (1) is detected after the closing of one of the relays (7) or one of the groups (7') of relays in a predeterminable time, and, if the tripping is recognized, the last activated relay (7) or the last activated group (7') ofrelays is opened, the earth leakage circuit breaker (1) is closed via a reclosing device (3), and thereafter the next relay (7) or the next group (7') of relays of the predeterminable sequence is closed.

5. A method for triggering a switching device according to claim 4, **characterized in that** the relays (7) are regrouped after the tripping of the earth leakage circuit breaker (1).

6. A method for triggering a switching device according to claim 5, **characterized in that** after the tripping of the earth leakage circuit breaker (1) at least one group (7') of relays is subdivided into at least two subgroups (7") of one or several relays (7).

7. A method for triggering a switching device according to one of the claims 4 to 6, **characterized in that** after a predeterminable waiting period an opened relay (7) or a group (7') of opened relays (7) is closed, and, in the case of tripping of the earth leakage circuit breaker (1), the method according to claim 1 starts again within a predetermined time after the closing.

## Revendications

1. Dispositif de commutation pour un distributeur électrique avec un disjoncteur de protection contre les courants de court-circuit (1) doté d'un levier (4) et au moins deux disjoncteurs de protection de ligne (8) montés en aval de celui-ci, qui protègent chacun au moins un circuit électrique, **caractérisé en ce que** chaque disjoncteur de protection de ligne (8) est immédiatement précédé ou suivi par un relais (7), **en ce qu'**il est prévu un appareil de réarmement (3) pour l'actionnement du levier (4), et **en ce qu'**il est prévu en outre une unité de commande (6) qui est reliée du côté de l'entrée au disjoncteur de protection contre les courants de court-circuit (1) et du côté de la sortie à chaque relais (7) et à l'appareil de réarmement (3), l'unité de commande (6) commandant en fonction de l'état de commutation du disjoncteur de protection contre les courants de court-circuit (1) un programme de commande qui commande l'appareil de réarmement (3) et chaque relais (7) séparément ou par groupes selon un programme prédéterminé.

2. Dispositif de commutation selon la revendication 1, **caractérisé en ce qu'**il est prévu un dispositif de mémoire (9) qui mémorise, pour chaque relais (7) ou pour des groupes (7') de relais (7) pouvant être prédéterminés, si lors de la dernière fermeture du relais (7) ou du groupe (7') de relais (7) pouvant être prédéterminé, le disjoncteur de protection contre les courants de court-circuit (1) a été déclenché ou non pendant un intervalle de temps prédéterminé immédiatement après la fermeture.

3. Dispositif de commutation selon la revendication 1 ou 2, **caractérisé en ce qu'**il est prévu un dispositif de signalisation (10), par exemple un appareil d'affichage, un module de modem, un module SMS, un module radio ou similaire, pour la visualisation et/ou la transmission de l'information indiquant si, lors de la dernière fermeture du relais (7) ou du groupe prédéterminé de relais (7), le disjoncteur de protection contre les courants de court-circuit (1) a été déclenché ou non pendant un intervalle de temps prédéterminé immédiatement après la fermeture.

4. Procédé pour la commande d'un dispositif de commutation pour un distributeur électrique avec un disjoncteur de protection contre les courants de court-circuit (1) et au moins deux disjoncteurs de protection de ligne (8) montés en aval de celui-ci, qui protègent chacun au moins un circuit électrique, en particulier selon l'une des revendications 1 à 3, **caractérisé en ce qu'**après un déclenchement d'un disjoncteur de protection contre les courants de court-circuit (1), des relais (7) associés à des disjoncteurs de protection de ligne (8) sont ouverts, chacun des relais (7) étant monté immédiatement avant ou après un disjoncteur de protection de ligne (8), le disjoncteur de protection contre les courants de court-circuit (1) est fermé par un appareil de réarmement (3), les relais (7) sont fermés séparément et/ou par groupes (7') pouvant être prédéterminés dans un ordre pouvant être prédéterminé, le déclenchement du disjoncteur de protection contre les courants de court-circuit (1) est détecté après la fermeture de l'un des relais (7) ou de l'un des groupes (7') de relais pendant un temps pouvant être prédéterminé et, si un déclenchement est détecté, le dernier relais activé (7) ou le dernier groupe (7') de relais activé est ouvert, le disjoncteur de protection contre les courants de court-circuit (1) est fermé par un appareil de réarmement (3) et le relais (7) suivant ou le groupe (7') de relais suivant dans l'ordre pouvant être prédéfini est ensuite fermé.

5. Procédé pour la commande d'un dispositif de commutation de commutation selon la revendication 4, **caractérisé en ce qu'**après le déclenchement du disjoncteur de protection contre les courants de court-circuit (1), le groupage des relais (7) est modifié.

6. Procédé pour la commande d'un dispositif de commutation de commutation selon la revendication 5, **caractérisé en ce qu'**après le déclenchement du disjoncteur de protection contre les courants de court-circuit (1), au moins un groupe (7') de relais est divisé en au moins deux sous-groupes (7") d'un ou plusieurs relais (7).

7. Procédé pour la commande d'un dispositif de commutation de commutation selon l'une des revendications 4 à 6, **caractérisé en ce qu'**après un temps pouvant être prédéterminé, un relais (7) ouvert ou un groupe (7') de relais (7) ouverts est fermé et, en cas de déclenchement du disjoncteur de protection contre les courants de court-circuit (1) dans un intervalle de temps pouvant être prédéterminé après la fermeture, le procédé selon la revendication 1 recommence.
